# EUROPÄISCHE PATENTANMELDUNG

(11) **EP 4 570 544 A1**
(43) Veröffentlichungstag der Anmeldung: **18.06.2025**
(21) Anmeldenummer: 23217176.9
(22) Anmeldetag: 15.12.2023
(51) Int. Cl.: B60J 5/14

(54) **NUTZFAHRZEUGAUFBAU MIT ROLLTOR**

(71) Anmelder: Schmitz Cargobull AG, 48341 Altenberge (DE)
(72) Erfinder: OVERBECK, Nicolas, 46399 Bocholt (DE)
(74) Vertreter: Cohausz & Florack

(57) **Zusammenfassung**

Ein Nutzfahrzeugaufbau (2) für ein Nutzfahrzeug mit einem Rolltor (8), umfassend ein von einer geschlossenen Stellung in eine geöffnete Stellung und zurück verstellbaren Wandelement (9) und ein Schienensystem (10) zum Führen des Wandelements (9), wobei das Wandelement (9) eine Reihe von Paneelen (18,19) aufweist, wobei die Paneele (18,19) an aneinander angrenzenden Rändern über Verbindungsprofile (31,31) formschlüssig miteinander verbunden sind, wobei an dem obersten Paneel (18) des Wandelements (9) wenigstens ein oberer Rollenhalter (16) vorgesehen ist und wobei der wenigstens eine Rollenhalter (16) wenigstens eine an dem Schienensystem (10) geführte Rolle (15) hält. Es ist vorgesehen, dass der wenigstens eine obere Rollenhalter (16) über wenigstens ein separates Montagemittel (21) in einer T-Nut (25) des obersten Paneels (18) gehalten ist und dass das wenigstens eine Montagemittel (21) abschnittsweise durch wenigstens ein sich quer zur T-Nut (25) erstreckendes Langloch (24) im wenigstens einen oberen Rollenhalter (16) hindurchgreift.

## Beschreibung

Die Erfindung betrifft einen Nutzfahrzeugaufbau für ein Nutzfahrzeug, insbesondere Lastkraftwagen, Anhänger oder Sattelauflieger, mit einem Rolltor, umfassend ein von einer den Nutzfahrzeugaufbau verschließenden geschlossenen Stellung in eine den Nutzfahrzeugaufbau zum Be- und/oder Entladen freigebende geöffnete Stellung und zurück verstellbaren Wandelement und ein Schienensystem zum Führen des Wandelements während des Verstellens des Wandelements von der geschlossenen Stellung in die geöffnete Stellung und zurück, wobei das Wandelement eine Reihe von Paneelen aufweist, wobei die Paneele an aneinander angrenzenden Rändern über Verbindungsprofile formschlüssig miteinander verbunden sind, wobei an dem obersten Paneel des Wandelements wenigstens ein oberer Rollenhalter vorgesehen ist und wobei der wenigstens eine Rollenhalter wenigstens eine an dem Schienensystem geführte Rolle hält.

Nutzfahrzeuge, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen.

So sind beispielsweise Planenaufbauten bekannt, bei denen die Seitenwände und das Dach durch wenigstens eine Planeneinheit verschlossen sind. Die Stirnwand ist bei Planenaufbauten meist als feste Wand ausgebildet, während die Rückwand meist Flügeltüren aufweist, um den Laderaum bedarfsweise von hinten zu beladen. Wenn eine Planeneinheit entlang der Seitenwand verschoben werden kann, spricht man auch von sogenannten Curtainsidern.

Neben den Planenaufbauten sind beispielsweise auch Kofferaufbauten mit festen Seitenwänden, einer festen Stirnwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Rückwand der Kofferaufbauten wird meist durch zwei Flügeltüren oder ein Rolltor verschlossen.

Die Kofferaufbauten weisen oftmals an der Stirnwand, dem Dach und/oder den Seitenwänden zweischalige Paneele auf. Die Paneele umfassen dabei eine äußere und eine innere, strukturgebende Decklage sowie eine dazwischen vorgesehene Kernlage, die typischerweise aus einem, insbesondere geschäumten, Kunststoff gebildet wird. Dabei können die innere und/oder die äußere Decklage selbst bedarfsweise mehrlagig aufgebaut sein. Insbesondere geschäumte Kernlagen oder Kernlagen mit einem hohen Luftanteil können für ein hohes Maß an thermischer Isolation des Laderaums sorgen. Entsprechende Nutzfahrzeugaufbauten werden daher zweckmäßig für Kühltransporte eingesetzt. Um den Laderaum zu kühlen, weisen diese Nutzfahrzeuge typischerweise Transportkältemaschinen auf, die an der Stirnwand des Nutzfahrzeugaufbaus montiert sind, Luft aus dem Laderaum ansaugen, die angesaugte Luft kühlen und die gekühlte Luft anschließend wieder in den Laderaum zurück blasen.

Darüber hinaus sind Kofferaufbauten mit einschaligen Paneelen bekannt, die einen umlaufenden Rahmen oder eine von dem Paneel verschlossene Gitterstruktur aus vertikalen und horizontalen Profilen aufweisen. Das Paneel wird dabei meist aus einem oder aus mehreren Paneelelementen gebildet, die wenigstens im Wesentlichen aus einem glasfaserverstärkten Kunststoff, Stahl oder Aluminium gebildet sind, sowie bedarfsweise lackiert sind. Um beispielsweise das Dach abzustützen, können die Paneele mit einer Mehrzahl von zur Aussteifung des Paneels vorgesehenen, wenigstens im Wesentlichen quer zur Längsrichtung des Paneels ausgerichteten und in Längsrichtung des Paneels zwischen den Rändern des Paneels angeordneten Pfeilerelementen vorgesehen sein. Aufgrund der einschaligen Bauweise dieser Nutzfahrzeugaufbauten werden diese für den sogenannten Trockentransport aber nur in Ausnahmefällen für den Kühltransport eingesetzt. Nutzfahrzeuge mit entsprechenden Kofferaufbauten, werden auch als Trockenfrachter bezeichnet.

Nutzfahrzeugaufbauten, insbesondere Kofferaufbauten, deren Rückwand keine Flügeltüren aufweisen, sind typischerweise mit einem Rolltor zum Verschließen der Rückwand ausgestattet. Die Rolltore weisen ein Wandelement auf, das aus einer Reihe von Paneelen zusammengesetzt ist und entlang eines Schienensystems von einer unteren, die Rückwand verschließenden, geschlossenen Stellung in eine obere, die Rückwand zum Be- und/oder Entladen freigebende, geöffnete Stellung verstellt werden kann. Dazu erstreckt sich das Schienensystem sowohl abschnittsweise im Bereich des Rückwandrahmens als auch abschnittsweise im Bereich des Dachs.

Zudem sind an den Paneelen des Wandelements Rollenhalter mit Rollen vorgesehen, die an dem Schienensystem geführt sind, um das Wandelement von der geschlossenen Stellung in die geöffnete Stellung und zurück verstellen zu können. Die Rollenhalter und Rollen sind an beiden Seiten des Wandelements vorgesehen und dort jeweils an einem Schienenelement des Schienensystems geführt. Die Schienenelemente weisen typischerweise im Bereich der Rückwand und im Bereich des Dachs gerade Schienenabschnitte auf, während diese geraden Schienenabschnitte im Verbindungsbereich zwischen Rückwand und Dach jeweils über einen Bogen miteinander verbunden sind.

An den obersten Paneelen sind typischerweise andere Rollhalter als an anderen Paneelen des Wandelements vorgesehen, damit das oberste Paneel in der geschlossenen Stellung des Wandelements wenigstens im Wesentlichen vertikal und/oder wenigstens im Wesentlichen parallel zu den anderen Paneelen des Wandelements ausgerichtet ist. Bei dem obersten Paneel muss der Abstand der Rollen zum Paneel nämlich infolge des Bogens größer sein als bei den anderen Paneelen, wenn das Wandelement in der unteren, geschlossenen Stellung ist und das Wandelement dann insgesamt möglichst eben sein soll.

Außerdem muss der obere Rollenhalter gegenüber dem obersten Paneel des Wandelements wenigstens in der Höhe einstellbar sein, damit Toleranzen in dieser Richtung ausgeglichen werden können. Andernfalls besteht das Risiko, dass sich das oberste Paneel nicht wie gewünscht entlang des Schienensystems verstellen lässt. Entweder müssen höhere Kräfte für das Verstellen des Wandelements aufgewendet werden oder es kann zu einem Verklemmen des obersten Paneels im Bereich des Bogens des Schienensystems kommen. Zudem kann es zu Undichtigkeiten etwa der Rückwand kommen. Um die Einstellbarkeit zu gewährleisten sind die oberen Rollenhalter typischerweise mehrteilig ausgebildet. Eine Montageplatte wird an dem obersten Paneel angebracht. Anschließend wird ein Grundkörper über Langlöcher mit der Montageplatte verschraubt, so dass der Grundkörper gegenüber der Montageplatte quer zur Längserstreckung des obersten Paneels in die gewünschte Position verschoben werden kann, bevor der Grundkörper mit der Montageplatte und dem obersten Paneel fest verbunden wird.

In vielen Fällen handelt es sich bei den Paneelen um Profile aus Kunststoff, Stahl oder Aluminium, welche einen Hohlraum oder mehrere Hohlräume einschließen, um leicht und doch stabil ausgebildet werden zu können. Bei geschlossenem Rolltor sind die Paneele des Wandelements der Reihe nach übereinander angeordnet, wobei die Paneele sich quer zur Rückwand erstrecken und schwenkbar miteinander verbunden sind. Zur Ausbildung der Verbindung sind zumindest die mittleren Paneele mit oberen Verbindungsprofilen und unteren Verbindungsprofilen versehen, die so korrespondierend zueinander ausgebildet sind, dass sie einerseits formschlüssig miteinander verbunden und doch um eine Längsachse parallel zu den Paneelen gegeneinander geschwenkt werden können. Das obere Paneel des Wandelements kann an seinem oberen Rand ein Verbindungsprofil zur Aufnahme einer Dichtung zum Abdichten des Wandelements gegenüber einem oberen Teil des Rückwandrahmens aufweisen. Das untere Paneel kann an seinem unteren Rand ein Verbindungsprofil zur Aufnahme einer Dichtung zum Abdichten des Wandelements gegenüber dem Ladeboden oder dem unteren Teil des Rückwandrahmens aufweisen.

Rolltore machen das Aufschwenken von Flügeltüren an der Rückwand des Nutzfahrzeugaufbaus entbehrlich, was aus Platzgründen nicht immer problemlos erfolgen kann. Rolltore sind grundsätzlich aber relativ aufwendig und damit teuer.

Daher liegt der vorliegenden Erfindung die Aufgabe zugrunde, Nutzfahrzeugaufbauten und Nutzfahrzeuge der eingangsgenannten und zuvor näher erläuterten Art derart auszugestalten und weiterzubilden, dass diese einfacher und kostengünstiger gefertigt werden können.

Diese Aufgabe ist bei einem Nutzfahrzeugaufbau nach dem Oberbegriff von Anspruch 1 dadurch gelöst, dass der wenigstens eine obere Rollenhalter über wenigstens ein separates Montagemittel in einer T-Nut des obersten Paneels gehalten ist und dass das wenigstens eine Montagemittel abschnittsweise durch wenigstens ein sich quer zur T-Nut erstreckendes Langloch im wenigstens einen oberen Rollenhalter hindurchgreift.

Die T-Nut im Paneel erlaubt es, ein Montagemittel direkt am obersten Paneel zu montieren, das abschnittweise durch ein Langloch im oberen Rollenhalter greift. Der Rollenhalter kann dabei beim Verbinden des Montagemittels in der T-Nut, davor oder danach gegenüber dem Paneel ausgerichtet werden. Dabei ist der obere Rollenhalter entlang der Längserstreckung des Langlochs gegenüber dem obersten Paneel verschiebbar. Wenn der obere Rollenhalter mit dem Paneel verbunden ist, behält der Rollenhalter die entsprechende Ausrichtung in Bezug auf das oberste Paneel bei. Die Einstellung des Rollenhalters ist insbesondere in der Höhenrichtung bezogen auf das Wandelement oder quer zur Längserstreckung des obersten Paneels vorgesehen. Daher erstreckt sich das Langloch wenigstens im Wesentlichen quer zur T-Nut, die sich bevorzugt wenigstens im Wesentlichen in Längsrichtung des obersten Paneels erstreckt. Auf diese Weise ist bedarfsweise ein Ausrichten des oberen Rollenhalters in zwei Richtungen möglich, und zwar in der Richtung der T-Nut einerseits und in der Richtung des Langlochs andererseits.

Die Montageschritte werden auf die beschriebene Weise vereinfacht und es werden auch weniger, insbesondere materialintensive, Bauteile zur Montage des oberen Rollenhalters an dem obersten Paneel benötigt. Somit lässt sich die Herstellung insgesamt vereinfachen und kostengünstiger gestalten.

Für das Verstellen des obersten Paneels entlang des Schienensystems bietet es sich an, wenn wenigstens zwei obere Rollenhalter an dem obersten Paneel vorgesehen sind, und zwar insbesondere an gegenüberliegenden Längsseiten des obersten Paneels. Jeder obere Rollenhalter kann dann wenigstens eine Rolle halten, die an jeweils einem Schienenelement des Schienensystems geführt ist. Dabei ist es besonders bevorzugt, wenn die oberen Rollenhalter gleichartig ausgebildet und gleichartig an dem obersten Paneel befestigt sind.

Bei einem ersten besonders bevorzugten Nutzfahrzeugaufbau kann zur Vermeidung eines unbeabsichtigten Verdrehens des oberen Rollenhalters der obere Rollenhalter über wenigstens zwei Montagemittel an der T-Nut oder an unterschiedlichen T-Nuten montiert werden. Die Herstellung des obersten Paneels ist jedoch einfacher und kostengünstiger, wenn die mehreren Montagemittel eines oberen Rollenhalters in einer gemeinsamen T-Nut montiert sind. Bei mehreren Montagemitteln zur Montage eines oberen Rollenhalters ist es weiter bevorzugt, wenn jedes Montagemittel abschnittweise durch ein separates Langloch des oberen Rollenhalters greift. Dies vereinfacht das Ausrichten des oberen Rollenhalters und begünstigt dessen Montage.

Alternativ oder zusätzlich kann sich das wenigstens eine Langloch wenigstens im Wesentlichen senkrecht zur T-Nut erstrecken. So lässt sich der obere Rollenhalter separat über die T-Nut und das wenigstens eine Langloch in zwei unterschiedliche, wenigstens im Wesentlichen senkrecht zueinanderstehende Richtungen verstellen. Unabhängig davon kann sich die wenigstens eine T-Nut der einfacheren Herstellung wegen wenigstens im Wesentlichen parallel zur Längsrichtung des obersten Paneels erstrecken. Wenn dann das wenigstens eine Langloch noch senkrecht zur T-Nut ausgerichtet ist, kann der obere Rollenhalter zweckmäßig in Längsrichtung und in quer zur Längserstreckung des obersten Paneels eingestellt werden.

Um an beiden Längsenden obere Rollenhalter auf die gleiche Weise montieren zu können, bietet es sich der Einfachheit halber an, wenn sich die T-Nut wenigstens im Wesentlichen über die gesamte Längserstreckung des Paneels erstreckt. Dann können obere Rollenhalter an unterschiedlichen Stellen der T-Nut montiert werden. Beispielsweise können gegenüberliegenden Enden der T-Nut zugeordnet zwei obere Rollenhalter jeweils über wenigstens ein separates, durch ein sich quer zur T-Nut erstreckendes Langloch hindurchgreifendes Montagemittel in der T-Nut festgelegt werden.

Für eine einfache und kostengünstige Herstellung des Rolltors bietet es sich an, wenn das wenigstens eine Montagemittel eine Schraube, ein Bolzen und/oder ein Niet ist. Niete lassen sich einfach montieren. Bolzen können meist größere Kräfte aufnehmen und Schrauben erlauben eine lösbare Befestigung für ein etwaiges Nachjustieren oder einen Austausch des oberen Rollenhalters. Im Falle wenigstens einer Schraube kann diese mit wenigstens einem in der T-Nut aufgenommenen Nutenstein verschraubt sein. Denkbar ist es aber auch, dass die wenigstens eine Schraube mit einem Schraubenkopf nach Art eines Nutensteins in die T-Nut eingeschoben und der obere Rollenhalter dann über wenigstens eine Mutter an der wenigstens einen Schraube gekontert wird.

Für eine einfache und kostengünstige Herstellung des oberen Rollenhalters kann es zweckmäßig sein, wenn das wenigstens eine Langloch in einem Basisteil des oberen Rollenhalters vorgesehen ist. Der obere Rollenhalter kann dann mehrteilig ausgebildet werden, wodurch jedes einzelne Teil des oberen Rollenhalters einfacher und kostengünstiger gefertigt werden kann. Besonders bevorzugt ist es dabei, wenn das Basisteil mit seiner Rückseite an der Innenseite des obersten Paneels anliegt. Es muss dann kein weiteres Bauteil zwischen dem Basisteil und dem obersten Paneel vorgesehen sein. Dies gilt insbesondere dann, wenn die Rückseite des Basisteils im Bereich des wenigstens einen Langlochs und/oder flächig an der Innenseite des obersten Paneels des Wandelements anliegt. Zugleich wird so eine dauerhafte und zuverlässige Verbindung zwischen dem oberen Rollenhalter und dem obersten Paneel ermöglichst.

Eine weitere Vereinfachung des oberen Rollenhalters kann erreicht werden, wenn das Basisteil und die wenigstens eine Rolle des Rollenhalters über einen Schwenkarm miteinander verbunden sind. Das Basisteil und der Schwenkarm können dann recht einfach und kostengünstig ausgenbildet werden. Außerdem wird dadurch die Führung des obersten Paneels entlang des Schienensystems verbessert. Wenn der Schwenkarm über eine Schwenkachse parallel zur Längserstreckung des obersten Paneels mit dem Basisteil verbunden ist, können geringe Ungenauigkeiten oder Toleranzen bei der Montage des Rolltors in Kauf genommen werden.

Der besseren Führung des Wandelements entlang des Schienensystems halber kann es sich anbieten, wenn der wenigstens eine obere Rollenhalter wenigstens zwei Rollen hält, die an dem Schienensystem geführt sind. Dabei können der Einfachheit halber die zwei Rollen über wenigstens einen, insbesondere gemeinsamen, Schwenkarm mit dem Basisteil verbunden sein.

Zur genauen Positionierung und einfacheren Montage des oberen Rollenhalters, kann es sich anbieten, wenn der wenigstens eine obere Rollenhalter wenigstens einen am Außenrand des obersten Paneels von außen anliegenden Anschlag aufweist. Dies gilt umso mehr, wenn wenigstens zwei am Außenrand des obersten Paneels von außen anliegenden Anschläge von dem oberen Rollenhalter aufgewiesen werden. Wenn das wenigstens eine Montagemittel lose in der T-Nut aufgenommen ist, kann der obere Rollenhalter mit dem Montagemittel so weit entlang der T-Nut verschoben werden, bis der wenigstens eine Anschlag von der Außenseite des Rands des obersten Paneels an der Außenseite des Rands des obersten Paneels anliegt. In Richtung der T-Nut ist der obere Rollenhalter dann in gewünschter Weise ausgerichtet. Wenn an gegenüberliegenden Rändern des obersten Paneels zwei obere Rollenhalter vorgesehen sind, können sich diese in der Weise voneinander unterscheiden, dass aus unterschiedlichen Richtungen jeweils wenigstens ein Anschlag an der jeweiligen Außenseite des Rands anliegt. Dann ist eine gleichartige Montage der oberen Rollenhalter an beiden Seiten des obersten Paneels möglich, auch wenn diese spiegelbildlich erfolgen kann.

Um die Anzahl der Gleichteile des Wandelements zu erhöhen, kann der wenigstens eine obere Rollenhalter in der Längsrichtung des obersten Paneels gesehen an gegenüberliegenden Seiten jeweils wenigstens einen seitlich vorstehenden Anschlagvorsprung aufweisen. Von diesen wenigstens zwei Anschlagvorsprüngen wird aber jeweils nur einer zur Bereitstellung eines Anschlags zu Anlage an der Außenseite des Rands des obersten Paneels verwendet. Dazu ist der entsprechende Anschlagsvorsprung an der jeweiligen Außenseite umgebogen, so dass dieser Anschlagsvorsprung einen Anschlag zur Anlage an die Außenseite des Rands des obersten Paneels bereitstellt.

Besonders bevorzugt ist er zur Ausrichtung der oberen Rollenhalter, wenn auf den gegenüberliegenden Seiten der Rollenhalter wenigstens zwei seitlich vorstehende Anschlagvorsprünge vorgesehen sind. So können an jeder Seite zwei Anschläge bereitgestellt werden. Es sind bei jedem Rollenhalter aber nur die wenigstens zwei Anschlagvorsprünge des oberen Rollenhalters an der Seite umgebogen, die der Außenseite des zugeordneten Rands des obersten Paneels zugeordnet ist. Der obere Rollenhalter kann sich dann nicht versehentlich verdrehen, bevor der obere Rollenhalter an dem obersten Paneel festgelegt ist.

Der einfacheren Fertigung unter Nutzung von Gleichteilen halber kann es bevorzugt sein, wenn zwei gegenüberliegenden Rändern des obersten Paneels zugeordnete obere Rollenhalter vorgesehen sind, bei denen in der Längsrichtung des obersten Paneels gesehen an gegenüberliegenden Seiten jeweils wenigstens ein, insbesondere wenigstens zwei, seitlich vorstehende Anschlagvorsprünge vorgesehen sind. Es können dann gleiche obere Rollenhalter an beiden Längsseiten des obersten Paneels verwendet werden. Bei den wenigstens zwei oberen Rollenhaltern ist dann lediglich der wenigstens eine dem entsprechenden Rand des obersten Paneels zugeordnete Anschlagvorsprung umgebogen. Nur die umgebogenen Anschlagvorsprünge bilden einen Anschlag zum Anschlag an der Außenseite des entsprechenden Rands des obersten Paneels. Es sind also bei den wenigstens zwei oberen Rollenhaltern die an gegenüberliegenden Seiten der oberen Rollenhalter vorgesehenen Anschlagvorsprünge umgebogen. An jedem oberen Rollenhalter sind also die dem zugehörigen Rand des obersten Paneels zugeordneten Anschlagvorsprünge umgebogen. Wenn die oberen Rollenhalter an gegenüberliegenden Längsseiten des obersten Paneels angeordnet sind, sind jeweils die Anschlagvorsprünge an der jeweils anderen Seite umgebogen. Die Anschlagvorsprünge der jeweils anderen Seite sind dagegen nicht umgebogen, damit die oberen Rollenhalter einfacher montiert werden können.

Der wenigstens eine obere Rollenhalter kann der einfacheren Fertigung und der guten Haltbarkeit halber aus Blech, insbesondere Stahl, gebildet sein. Dies gilt in gleicher Weise bevorzugt auch für das Basisteil und/oder den Schwenkarm. Unabhängig davon kann es sich der Einfachheit halber anbieten, wenn das Basisteil und der Schwenkarm über eine durch das Basisteil und den Schwenkarm hindurchgreifende und eine Schwenkachse bildende Steckachse miteinander verbunden sind. Der Schwenkarm kann dann zuverlässig um die Steckachse herum gegenüber dem Basisteil geschwenkt werden.

Um eine zweckmäßige Positionierung des oberen Rollenhalters sicherzustellen, kann der wenigstens eine obere Rollenhalter und/oder die wenigstens eine T-Nut im Bereich des oberen Rands des obersten Paneels vorgesehen sein. Dann lässt sich das oberste Paneel gut entlang des Schienensystems verstellen. Unabhängig davon kann im Bereich des unteren Rands des obersten Paneels wenigstens eine weitere T-Nut vorgesehen sein. Hier können dann andere Ausstattungsmittel, etwa Rollenhalter, an dem obersten Paneel festgelegt werden.

Zur Vereinfachung und zur Reduzierung der Kosten für das Wandpaneel können das oberste Paneel und weitere Paneele des Wandelements gleichartig ausgebildet sein. Dies gilt insbesondere dann, wenn alle Paneele des Wandpaneels gleichartig ausgebildet sind. Dies muss nicht bedeuten, dass die Paneele identisch ausgebildet sind, auch wenn dies der Fall und bevorzugt sein kann. Die gleichartigen Paneele oder die weiteren gleichartigen Paneele mit Ausnahme des obersten Paneels können beispielsweise eine gleiche Breite zwischen dem unteren Rand und dem oberen Rand der Paneele aufweisen. Unterschiedliche Breiten der Paneele können angezeigt sein, um die Höhe des Wandelements an die Höhe des jeweiligen Rückwandrahmens anzupassen.

In den den unteren Rändern der weiteren gleichartigen Paneele zugeordneten T-Nuten können beispielsweise mittlere oder untere Rollenhalter gehalten sein, um so auch mittlere und/oder untere Paneele des Wandelements entlang des Schienensystems zu führen, wenn das Wandelement von der geschlossenen Stellung in die geöffnete Stellung und zurück verstellt wird. Dabei ist es zur Nutzung von Gleichteilen halber bevorzugt, wenn die Rollenhalter des Wandelements entweder als obere Rollenhalter oder als mittlere Rollenhalter ausgebildet sind. Es bedarf dann nur zwei unterschiedlicher Typen von Rollenhaltern, um das Rolltor zu fertigen.

Nachfolgend wird die Erfindung anhand einer lediglich ein Ausführungsbeispiel darstellenden Zeichnung näher erläutert. In der Zeichnung zeigt
- Fig. 1: ein erfindungsgemäßes Nutzfahrzeug mit einem erfindungsgemäßen Nutzfahrzeugaufbau in einer perspektivischen Ansicht,
- Fig. 2: ein Detail des Nutzfahrzeugaufbaus aus Fig. 1 in einem oberen Bereich des Rolltors in einer perspektivischen Schnittansicht von innen,
- Fig. 3: ein Detail des Nutzfahrzeugaufbaus aus Fig. 1 im Bereich eines oberen Rollenhalters des Rolltors in einer perspektivischen Schnittansicht,
- Fig. 4: das Detail aus Fig. 3 in einer Schnittansicht von der Seite,
- Fig. 5: ein Abschnitt des Wandelements des Rolltors aus Fig. 1 in einer seitlichen Schnittansicht,
- Fig. 6A-B: eine Verbindung zweier angrenzender Paneele des Rolltors aus Fig. 1 im verbundenen Zustand und während des Verbindens,
- Fig. 7: zwei unterschiedliche Paneele des Wandelements aus Fig. 1 in einer Seitenansicht und
- Fig. 8A-B: ein Detail des Nutzfahrzeugsaufbaus im Bereich des oberen Endes und unteren Endes des Wandelements.

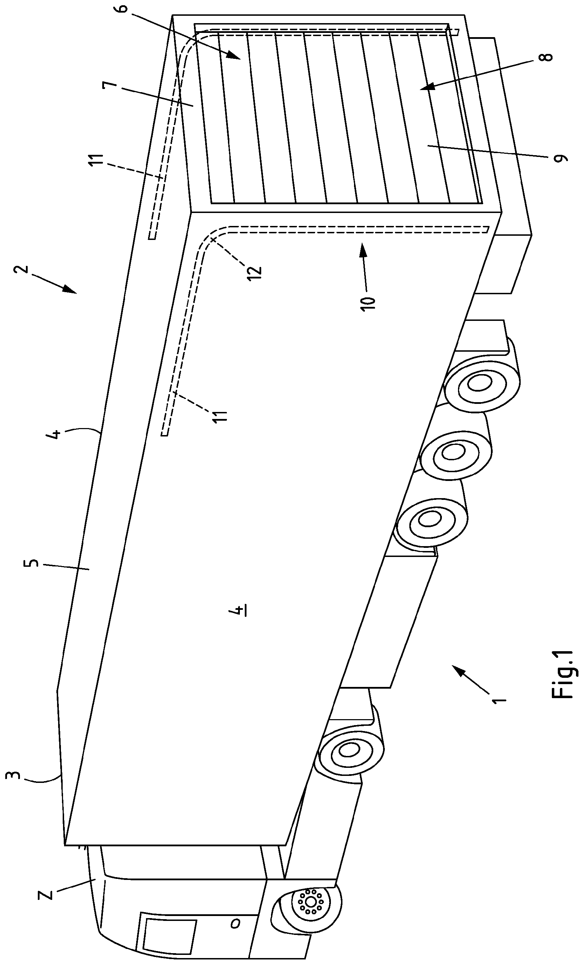

In der Fig. 1 ist ein von einer Zugmaschine Z gezogenes Nutzfahrzeug 1 mit einem Nutzfahrzeugaufbau 2 in Form eines Kofferaufbaus mit einer festen Stirnwand 3, Seitenwänden 4 und einem festen Dach 5 dargestellt. Die Rückwand 6 des Nutzfahrzeugaufbaus 2 wird durch einen Rückwandrahmen 7 und ein Rolltor 8 gebildet, das teilweise im Rückwandrahmen 7 aufgenommen ist. Das Rolltor 8 umfasst ein Wandelement 9, das sich entlang eines Schienensystems 10 an beiden Seiten des Rolltors 8 nach oben und wieder zurück nach unten verstellen lässt. In der oberen, geöffneten Stellung des Wandelements 9 gibt das Wandelement 9 den Rückwandrahmen 7 wenigstens bereichsweise zum Be- und/oder Entladen eines Laderaums des Nutzfahrzeugsaufbaus 2 frei. Das Wandelement 9 ist dann wenigstens im Wesentlichen unter dem Dach 5 angeordnet. Zu diesem Zweck umfassen die Schienenelemente 11 des Schienensystems 10 Bögen 12 im Verbindungsbereich von Dach 5 und Rückwandrahmen 7. Außerhalb dieser Bögen 12 erstrecken sich die Schienenabschnitte 13 der Schienenelemente 11 des Schienensystems 10 des dargestellten und insoweit bevorzugten Nutzfahrzeugaufbaus 2 wenigstens im Wesentlichen geradlinig. In der unteren, geschlossenen Stellung des Wandelements 9 verschließt das Wandelement 9 den Rückwandrahmen 7. In dieser Stellung ist das Wandelement 9 wenigstens im Wesentlichen parallel zum Rückwandrahmen 7 ausgerichtet und lässt sich das Wandelement 9 am unteren Rand des Rückwandrahmens 7 verriegeln.

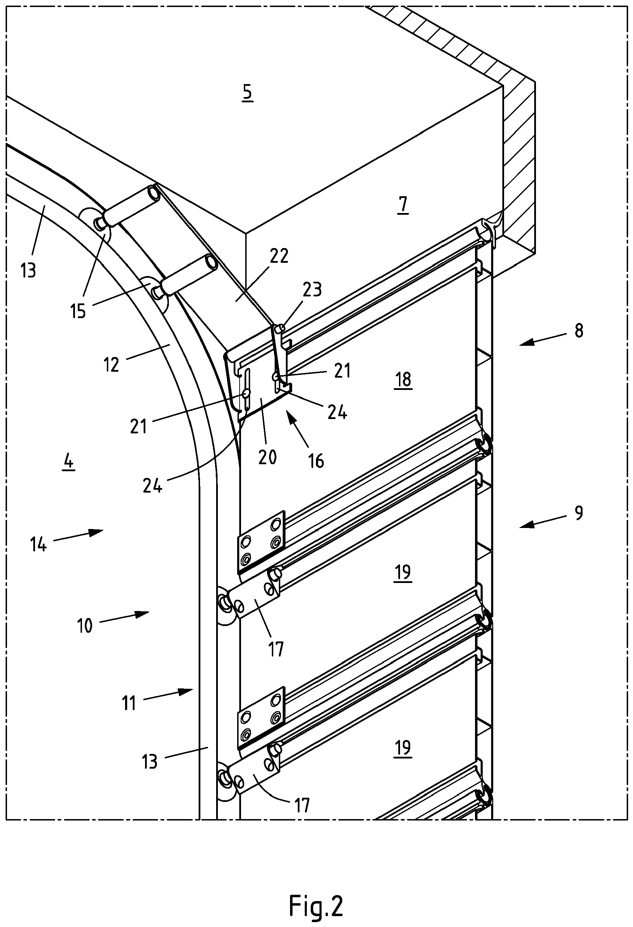

In der Fig. 2 ist ein Detail des Nutzfahrzeugs 1 im Bereich des Rückwandrahmens 7 mit dem oberen Ende des Rolltors 8 aus dem Laderaum 14 heraus gesehen dargestellt. Angrenzend an die Seitenwände 4 ist zu beiden Seiten des Wandelements 9 das separate Schienenelement 11 an beiden Seiten des Nutzfahrzeugaufbaus 2 umfassende Schienensystem 10 vorgesehen, in dem Rollen 15 geführt werden. Die Rollen 15 sind an Rollenhaltern 16,17 gehalten, die mit Paneelen 18,19 des Wandelements 9 verbunden sind. Beim Verstellen des Wandelements 9 zwischen der geschlossenen und der geöffneten Stellung rollen die Rollen 15 entlang des Schienensystems 10 bzw. der Schienenelemente 11 rauf und runter, wie die zugehörigen Paneele 18,19 nach oben und wieder nach unten verstellt werden. Die Paneele 18,19 sind so formschlüssig und gegeneinander schwenkbar, insbesondere um eine Längsachse drehbar, miteinander verbunden, dass die Paneele 18,19 während des Verstellens des Wandelements 9 entlang der Bögen 12 der Schienenelemente 11 sicher miteinander verbunden bleiben.

An dem obersten Paneel 18 ist ein oberer Rollenhalter 16 festgelegt, während an allen anderen Paneelen 19 die gleichen mittleren Rollenhalter 17 festgelegt sind. Der obere Rollenhalter 16 umfasst ein Basisteil 20, das mit Montagemitteln 21 in Form von, insbesondere, Schrauben oder Nieten mit dem obersten Paneel 18 verbunden ist. An dem Basisteil 20 ist ein Schwenkarm 22 befestigt, an dem zwei Rollen 15 gehalten sind. Die Rollen 15 sind an dem zugeordneten Schienenelement 11 des Schienensystems 10 geführt. Der Schwenkarm 22 ist über eine Steckachse 23 schwenkbar mit dem Basisteil 20 verbunden, wobei die Steckachse 23 durch Öffnungen im Basisteil 20 und im Schwenkarm 22 hindurchgreift.

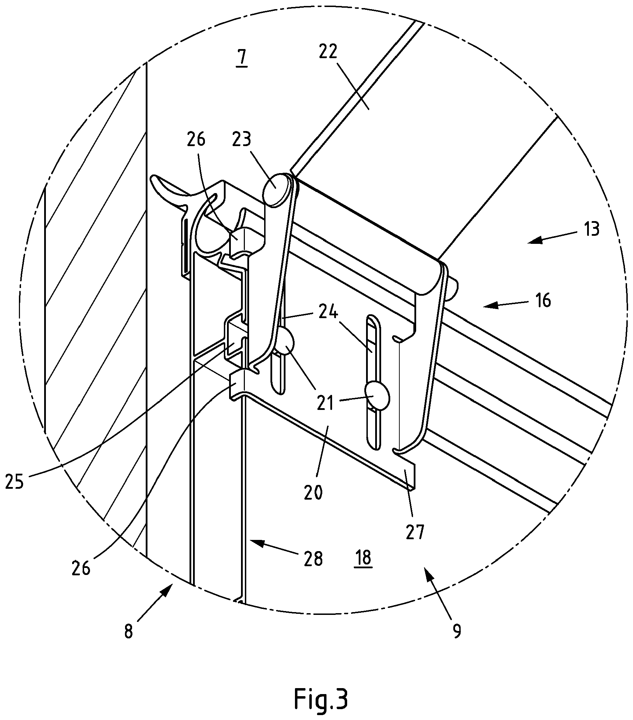

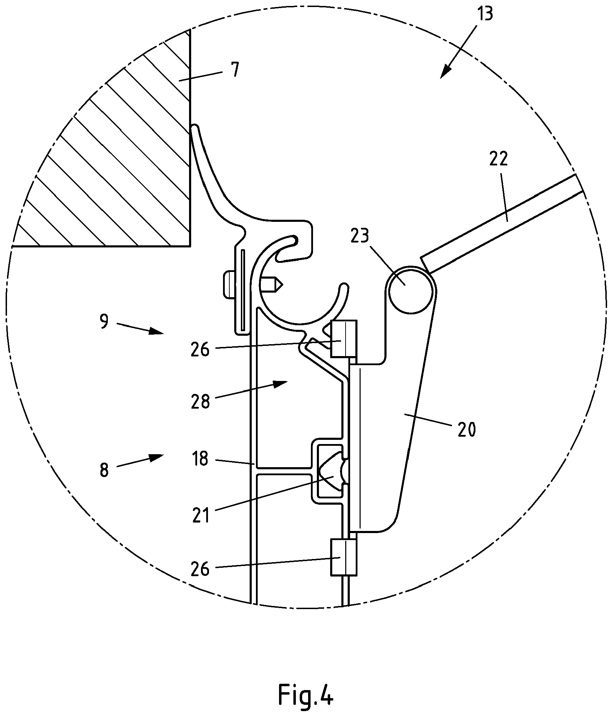

In den Fig. 3 und 4 ist die Verbindung des oberen Rollenhalters 16 an dem obersten Paneel 18 im Detail dargestellt. Das Basisteil 20 weist zur Montage des oberen Rollenhalters 16 zwei Langlöcher 24 auf, durch die hindurch abschnittsweise jeweils ein Montagemittel 21 greift. Mit den gegenüberliegenden Enden der Montagemittel 21 greifen diese formschlüssig in eine T-Nut 25 ein. Das Basisteil 20 weist in Richtung der T-Nut 25 an den gegenüberliegenden Seiten jeweils zwei Anschlagvorsprünge 26,27 auf. Bei dem dargestellten Basisteil 20 sind die linken, dem äußeren Rand 28 des obersten Paneels 18 zugeordneten Anschlagvorsprünge 26 umgebogen, so dass die Anschlagvorsprünge 26 jeweils einen Anschlag an dem zugehörigen äußeren Rand 28 des obersten Paneels 18 bereitstellen. Die gegenüberliegenden Anschlagvorsprünge 27 sind dagegen nicht umgebogen, sondern erstrecken sich in einer Ebene mit dem Basisteil 20 bzw. parallel zur Ebene des obersten Paneels 18. Die rechten, insbesondere in der Fig. 2 dargestellten Anschlagvorsprünge 27 behindern die Montage des oberen Rollenhalters 16 daher nicht.

Der nicht dargestellte, zweite obere Rollenhalter 16, welcher an der rechten Längsseite des obersten Paneels 18 in gleicher Weise wie der dargestellte obere Rollenhalter 16 montiert ist, ist ebenfalls aus einem Basisteil 20, einer Steckachse 23 und einem Schwenkarm 22 gebildet und über Montagemittel 21 mit dem obersten Paneel 18 verbunden. Das Basisteil 20, die Steckachsen 23, die Schwenkarme 22 und die Montagemittel 21 sind dabei bei beiden oberen Rollenhaltern 16 gleichartig oder sogar identisch ausgebildet. Der einzige Unterschied besteht in Bezug auf die Anschlagvorsprünge. Während bei dem aus dem Laderaum gesehen links montierten oberen Rollenhalter die links vorgesehenen Anschlagvorsprünge umgebogen sind, um jeweils einen Anschlag mit dem linken äußeren Rand des obersten Paneels 18 zu bilden, sind bei dem am rechten Längsende des obersten Paneels 18 montierten rechten oberen Rollenhalter die rechten Anschlagvorsprünge umgebogen, um jeweils einen Anschlag mit dem rechten äußeren Rand des obersten Paneels 18 zu bilden.

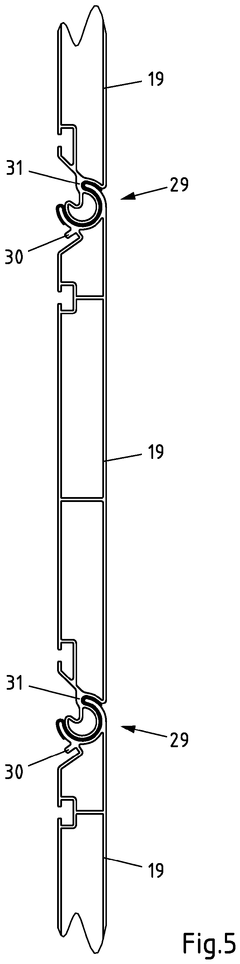

In der Fig. 5 sind drei miteinander verbundene Paneele 19 dargestellt. Die Verbindung 29 wird durch oberen Verbindungsprofile 30 und untere Verbindungsprofile 31 der Paneele 18,19 bereitgestellt, die formschlüssig ineinandergreifen. Dabei sind jeweils die oberen Verbindungsprofile 30 und die unteren Verbindungsprofile 31 gleichartig und derart korrespondierend zueinander ausgebildet, dass die aneinander angrenzenden Verbindungsprofile 30,31 der aneinander angrenzenden Paneele 18,19 verbunden werden können. Die Verbindbarkeit der Paneele 18,19 untereinander ist aber nicht darauf beschränkt. Vielmehr kann jedes der oberen Verbindungsprofile 30 eines beliebigen Paneels 18,19 des Wandelements 9 mit einem unteren Verbindungsprofil 31 eines beliebigen anderen Paneels 18,19 des Wandelements 9 formschlüssig verbunden werden. Bei dem dargestellten und insoweit bevorzugten Wandelement 9 sind die oberen Verbindungsprofile 30 der Paneele 18,19 und ebenso die unteren Verbindungsprofile 31 der Paneele 18,19 identisch zueinander ausgebildet.

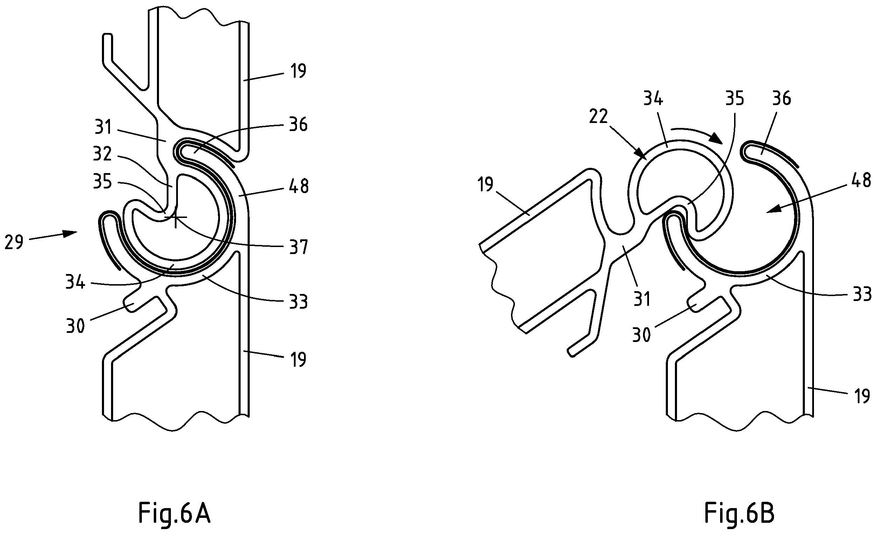

Die Verbindung 29 zweier Paneele 18,19 miteinander ist in den Fig. 6A-B im Detail dargestellt, wobei die Verbindung 29 in der Fig. 6A bereits gefügt und in der Fig. 6B während des Fügens dargestellt ist. Das jeweils obere Verbindungsprofil 30 der Paneele 18,19 ist in Form eines Nutprofils 48 ausgebildet, während jeweils das untere Verbindungsprofil 31 der Paneele 18,19 in Form eines Federprofils 32 ausgebildet ist. Das obere Verbindungsprofil 30 weist einen etwa dreiviertelkreisförmigen Nutbereich 33 auf, während das untere Verbindungsprofil 31 einen etwa dreiviertelkreisförmigen Federbereich 34 aufweist. Der Nutbereich 33 und der Federbereich 34 sind dabei so korrespondierend zueinander ausgebildet, dass der Federbereich 34 in dem Nutbereich 33 aufgenommen werden kann, und zwar bei dem dargestellten und insoweit bevorzugten Wandelement 9 formschlüssig.

Das untere Verbindungsprofil 31 ist im Wesentlichen als geschlossenes Teilprofil im Sinne eines Hohlprofilabschnitts ausgebildet. Dabei ist die Kontur des unteren Verbindungsprofils 31 so ausgebildet, dass der Federbereich 34 abschnittsweise wenigstens im Wesentlichen in Form einer Dreiviertelkreisfläche ausgebildet ist. Der Rücksprung 35 nach innen im Hohlprofilabschnitt erlaubt dabei das teilweise Einsetzen des Federbereichs 34 des unteren Verbindungsprofils 31 in den angrenzenden Nutbereich 33 des entsprechenden oberen Verbindungsprofils 30. Dabei nimmt der Bereich des Rücksprungs 35 einen endseitigen Abschnitt 36 des Nutbereichs 34 auf. Aus dieser relativen Position der beiden Verbindungsprofile 30,31 kann nun das untere Verbindungsprofil 31 in das korrespondierende obere Verbindungsprofil 30 eingeschwenkt werden, wobei der Federbereich 34 in den Nutbereich 33 hineinrutscht. Man spricht hierbei auch von einem Einwinkeln, da die Paneele 18,19 zunächst ein einem Winkel zueinander angenähert und anschließend gegeneinander geschwenkt werden, wobei sich der Federbereich 34 in die gewünschte Stellung in den Nutbereich 33 verschiebt. Dabei wird ein Formschluss geschaffen, der auch dann aufrechterhalten wird, wenn die Paneele 18,19 beim Verstellen nach oben im Bereich der Bögen 12 des Schienensystems 10 im Eckbereich zwischen Rückwandrahmen 7 und Dach 5 prinzipiell in die Gegenrichtung gegeneinander geschwenkt werden. Dabei bleibt der Federbereich 34 nämlich im Nutbereich 33 gehalten und dreht sich der Federbereich 34 lediglich um eine Längsachse 37 in dem Nutbereich 33.

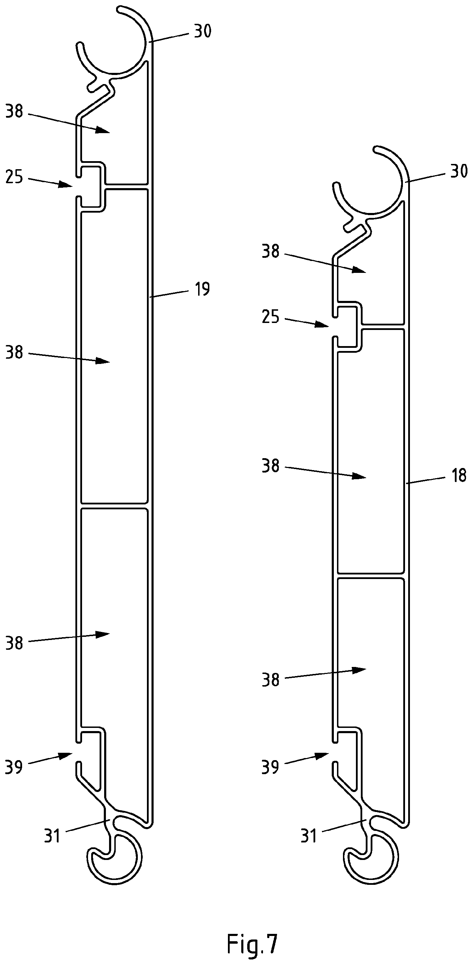

In der Fig. 7 sind zwei unterschiedliche Paneele 18,19 des Wandelements 9 dargestellt. Das dargestellte und insoweit bevorzugte Wandelement 9 weist dabei das rechts dargestellte, etwas schmalere Paneel 18 nur ein einziges Mal auf. Die anderen Paneele 19 des Wandelements 9 entsprechen alle identisch dem links dargestellten breiteren Paneel 19. Dabei bemisst sich die Breite der dargestellten und insoweit bevorzugten Paneele 18,19 vom oberen Rand des oberen Verbindungsprofils 30 bis zum unteren Rand des unteren Verbindungsprofils 31. In dieser Längserstreckung der Paneele 18,19 weisen diese zwischen den Verbindungsprofilen 30,31 drei Hohlprofilabschnitte 38 auf, die nacheinander folgend und aneinander angrenzend vorgesehen sind. Des Weiteren sind dem oberen Rand und dem unteren Rand der Paneele 18,19 zugeordnet jeweils eine T-Nut 25,39 vorgesehen. In diesen T-Nuten 25,39 können Nutensteine oder Montagemittel 21 eingeführt werden, an denen beispielsweise Rollenhalter 16,17 zum Halten der in dem Schienensystem 10 geführten Rollen 15 montiert, insbesondere verschraubt, werden können.

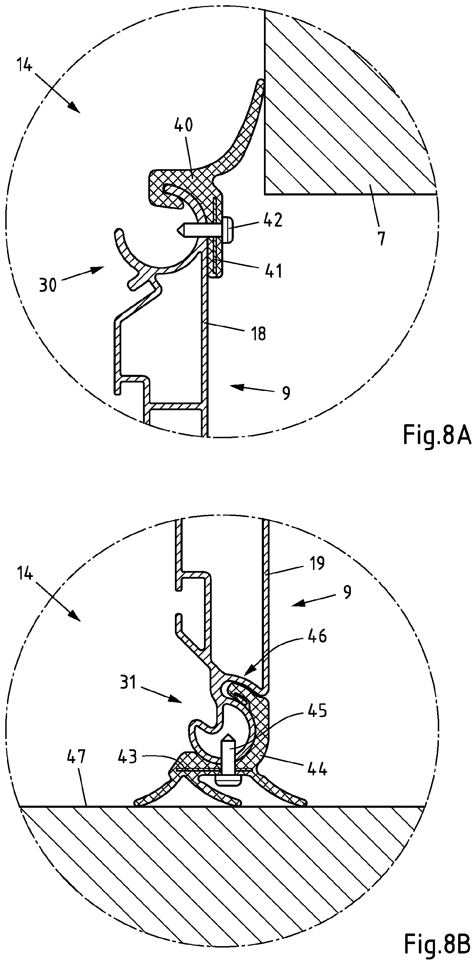

In der Fig. 8A ist der obere Abschnitt des Wandelements 9 dargestellt, wobei das obere Verbindungsprofil 30 des obersten Paneels 18 mit einer Dichtleiste 40 verbunden ist, die sich an einem oberen Rand des Rückwandrahmens 7 von innen abstützt, wenn sich das Wandelement 9 in der unteren, geschlossenen Stellung befindet. In der Dichtleiste 40 ist ein sich in Längsrichtung des Paneels 18 erstreckender Metallstreifen 41 vorgesehen, durch den hindurch die Dichtleiste 40 mit dem Nutbereich 33 des oberen Verbindungsprofils 30 über Schrauben 42 verschraubt ist. Zudem umgreift die Dichtleiste 40 den oberen Rand des Nutbereichs 33 formschlüssig.

In der Fig. 8B ist der untere Abschnitt des Wandelements 9 mit dem unteren Verbindungsprofil 31 des untersten Paneels 19 des Wandelements 9 dargestellt. Am Federbereich 34 des unteren Verbindungsprofils ist eine ein sich in Längsrichtung erstreckenden Metallstreifen 43 aufweisende Dichtleiste 44 vorgesehen. Die Dichtleiste 44 ist über den Metallstreifen 43 am unteren Ende des Federbereichs 34 über Schrauben 45 verschraubt. Die Dichtleiste 44 greift dabei formschlüssig um den Federbereich 34 des unteren Verbindungsprofils 31 herum. Dabei ist ein freies Ende der Dichtleiste 44 in Bezug auf das freie Ende nach hinten umgelegt an dem Verbindungsprofil 31 anliegend in eine Aufnahme 46 für ein Endbereich des Nutbereichs 33 aufgenommen. Diese Aufnahme 46 erfüllt bei unterschiedlichen Paneelen 18,19 unterschiedliche Funktionen. Die Dichtleiste 44 verkeilt sich daher, wenn Auszugskräfte auf die Dichtleiste 44 wirken. Die Dichtleiste 44 bleibt daher zuverlässig am unteren Verbindungsprofil 31 gehalten. Die Dichtleiste 44 stützt sich ferner mit gegenüberliegenden Enden an einem unteren Rand des Rückwandrahmens 7 bzw. des Ladebodens 47 des Nutzfahrzeugsaufbaus 2 ab.

### Bezugszeichenliste

- 1: Nutzfahrzeug
- 2: Nutzfahrzeugaufbau
- 3: Stirnwand
- 4: Seitenwände
- 5: Dach
- 6: Rückwand
- 7: Rückwandrahmen
- 8: Rolltor
- 9: Wandelement
- 10: Schienensystem
- 11: Schienenelement
- 12: Bogen
- 13: Schienenabschnitt
- 14: Laderaum
- 15: Rolle
- 16: Rollenhalter
- 17: Rollenhalter
- 18: Paneel
- 19: Paneel
- 20: Basisteil
- 21: Montagemittel
- 22: Schwenkarm
- 23: Steckachse
- 24: Langloch
- 25: T-Nut
- 26: Anschlagvorsprung
- 27: Anschlagvorsprung
- 28: äußerer Rand
- 29: Verbindung
- 30: oberes Verbindungsprofil
- 31: unteres Verbindungsprofil
- 32: Federprofil
- 33: Nutbereich
- 34: Federbereich
- 35: Rücksprung
- 36: Endbereich
- 37: Längsachse
- 38: Hohlprofilabschnitt
- 39: T-Nut
- 40: Dichtleiste
- 41: Metallstreifen
- 42: Schrauben
- 43: Metallstreifen
- 44: Dichtleiste
- 45: Schrauben
- 46: Aufnahme
- 47: Ladeboden
- 48: Nutprofil
- Z: Zugmaschine

## Patentansprüche

1. Nutzfahrzeugaufbau (2) für ein Nutzfahrzeug, insbesondere Lastkraftwagen, Anhänger oder Sattelauflieger, mit einem Rolltor (8), umfassend ein von einer den Nutzfahrzeugaufbau (2) verschließenden geschlossenen Stellung in eine den Nutzfahrzeugaufbau (2) zum Be- und/oder Entladen freigebende geöffnete Stellung und zurück verstellbaren Wandelement (9) und ein Schienensystem (10) zum Führen des Wandelements (9) während des Verstellens des Wandelements (9) von der geschlossenen Stellung in die geöffnete Stellung und zurück, wobei das Wandelement (9) eine Reihe von Paneelen (18,19) aufweist, wobei die Paneele (18,19) an aneinander angrenzenden Rändern über Verbindungsprofile (31,31) formschlüssig miteinander verbunden sind, wobei an dem obersten Paneel (18) des Wandelements (9) wenigstens ein oberer Rollenhalter (16) vorgesehen ist und wobei der wenigstens eine Rollenhalter (16) wenigstens eine an dem Schienensystem (10) geführte Rolle (15) hält,
**dadurch gekennzeichnet, dass**
der wenigstens eine obere Rollenhalter (16) über wenigstens ein separates Montagemittel (21) in einer T-Nut (25) des obersten Paneels (18) gehalten ist und dass das wenigstens eine Montagemittel (21) abschnittsweise durch wenigstens ein sich quer zur T-Nut (25) erstreckendes Langloch (24) im wenigstens einen oberen Rollenhalter (16) hindurchgreift.

2. Nutzfahrzeugaufbau nach Anspruch 1,
**dadurch gekennzeichnet, dass**
der wenigstens eine obere Rollenhalter (16) über wenigstens zwei separate Montagemittel (21) in einer T-Nut (25) des obersten Paneels (16) gehalten ist und dass die wenigstens zwei Montagemittel (21) jeweils abschnittsweise durch jeweils ein anderes, sich quer zur T-Nut (25) erstreckendes Langloch (24) im wenigstens einen oberen Rollenhalter (16) hindurchgreifen.

3. Nutzfahrzeugaufbau nach Anspruch 1 oder 2,
**dadurch gekennzeichnet, dass**
sich das wenigstens eine Langloch (24) wenigstens im Wesentlichen senkrecht zur T-Nut (25) erstreckt und/oder dass sich die wenigstens eine T-Nut (25) wenigstens im Wesentlichen parallel zur Längsrichtung des obersten Paneels (18) erstreckt.

4. Nutzfahrzeugaufbau nach einem der Ansprüche 1 bis 3,
**dadurch gekennzeichnet, dass**
sich die T-Nut (24) wenigstens im Wesentlichen über die gesamte Längserstreckung des obersten Paneels (18) erstreckt und dass, vorzugsweise, gegenüberliegenden Enden der T-Nut (25) zugeordnet zwei obere Rollenhalter (16) jeweils über wenigstens ein separates, durch ein sich quer zur T-Nut (25) erstreckendes Langloch (24) hindurchgreifendes Montagemittel (21) in der T-Nut (25) gehalten sind.

5. Nutzfahrzeugaufbau nach einem der Ansprüche 1 bis 4,
**dadurch gekennzeichnet, dass**
das wenigstens eine Montagemittel (21) eine Schraube, ein Bolzen und/oder ein Niet ist und dass, vorzugsweise, die wenigstens eine Schraube mit wenigstens einem in der T-Nut (25) aufgenommenen Nutenstein verschraubt ist.

6. Nutzfahrzeugaufbau nach einem der Ansprüche 1 bis 5,
**dadurch gekennzeichnet, dass**
das wenigstens eine Langloch (24) in einem Basisteil des oberen Rollenhalters (16) vorgesehen ist und dass, vorzugsweise, das Basisteil (20) mit seiner Rückseite, insbesondere im Bereich des wenigstens einen Langlochs (24) und/oder flächig, an der Innenseite des obersten Paneels (18) anliegt.

7. Nutzfahrzeugaufbau nach Anspruch 6,
**dadurch gekennzeichnet, dass**
das Basisteil (20) und die wenigstens eine Rolle (15) des oberen Rollenhalters (16) über einen Schwenkarm (22) miteinander verbunden sind und dass, vorzugsweise, der Schwenkarm (22) über eine Schwenkachse parallel zur Längserstreckung des obersten Paneels (18) mit dem Basisteil (20) verbunden ist.

8. Nutzfahrzeugaufbau nach einem der Ansprüche 1 bis 7,
**dadurch gekennzeichnet, dass**
der wenigstens eine obere Rollenhalter (16) wenigstens zwei Rollen (15) an dem Schienensystem (10) geführt aufweist und dass, vorzugsweise, die zwei Rollen (15) über wenigstens einen, insbesondere gemeinsamen, Schwenkarm (22) mit dem Basisteil (20) verbunden sind.

9. Nutzfahrzeugaufbau nach einem der Ansprüche 1 bis 8,
**dadurch gekennzeichnet, dass**
der wenigstens eine obere Rollenhalter (16) wenigstens einen, insbesondere wenigstens zwei, am äußeren Rand (28) des obersten Paneels (18) von außen anliegenden Anschlag aufweist und dass vorzugsweise, zwei an gegenüberliegenden Rändern des obersten Paneels (18) vorgesehene obere Rollenhalter (16) in entgegengesetzten Richtungen jeweils mit wenigstens einem Anschlag an den gegenüberliegenden äußeren Rändern (28) anliegen.

10. Nutzfahrzeugaufbau nach Anspruch 9,
**dadurch gekennzeichnet, dass**
der wenigstens eine obere Rollenhalter (16) in der Längsrichtung des obersten Paneels (18) gesehen an gegenüberliegenden Seiten jeweils wenigstens ein, insbesondere wenigstens zwei, seitlich vorstehende Anschlagvorsprünge (26,27) aufweist und dass lediglich an einer Seite des oberen Rollenhalters (16) der wenigstens eine einen Anschlag bereitstellende Anschlagvorsprung (16,27) zum zugehörigen äußeren Rand (28) des obersten Paneels (18) umgebogen ist.

11. Nutzfahrzeugaufbau nach Anspruch 10,
**dadurch gekennzeichnet, dass**
zwei gegenüberliegenden äußeren Rändern (28) des obersten Paneels (18) zugeordneten oberen Rollenhaltern (16) in der Längsrichtung des obersten Paneels (18) gesehen an gegenüberliegenden Seiten jeweils wenigstens ein, insbesondere wenigstens zwei, seitlich vorstehende Anschlagvorsprünge (26,27) aufweisen und dass an den zwei oberen Rollenhaltern (16) lediglich jeweils an gegenüberliegenden Seiten der oberen Rollenhalter (16) der wenigstens eine einen Anschlag bereitstellende Anschlagvorsprung (26,27) zum zugehörigen äußeren Rand (28) des obersten Paneels (18) umgebogen ist.

12. Nutzfahrzeugaufbau nach einem der Ansprüche 1 bis 11,
**dadurch gekennzeichnet, dass**
der wenigstens eine obere Rollenhalter (16), insbesondere das Basisteil (20) und/oder der Schwenkarm (22), aus Blech, insbesondere Stahl, gebildet ist und dass, vorzugsweise, das Basisteil (20) und der Schwenkarm (22) über eine durch das Basisteil (20) und den Schwenkarm (22) hindurchgreifende und eine Schwenkachse bildende Steckachse (23) miteinander verbunden sind.

13. Nutzfahrzeugaufbau nach einem der Ansprüche 1 bis 12,
**dadurch gekennzeichnet, dass**
der wenigstens eine obere Rollenhalter (16) und/oder die wenigstens eine T-Nut (25) im Bereich des oberen Rands des obersten Paneels (18) vorgesehen ist und dass, vorzugsweise, im Bereich des unteren Rands des obersten Paneels (18) wenigstens eine weitere T-Nut (39) vorgesehen ist.

14. Nutzfahrzeugaufbau nach einem der Ansprüche 1 bis 13,
**dadurch gekennzeichnet, dass**
das oberste Paneel (18) und weitere Paneele (19) des Wandelements (9) gleichartig ausgebildet sind und dass, vorzugsweise, die gleichartigen Paneele (18,19) eine gleiche Breite zwischen dem unteren Rand und dem oberen Rand der Paneele (18,19) aufweisen.

15. Nutzfahrzeugaufbau nach Anspruch 10,
**dadurch gekennzeichnet, dass**
in den den unteren Rändern der weiteren gleichartigen Paneele (18,19) zugeordneten T-Nuten (39) mittlere oder untere Rollenhalter (17) gehalten sind und dass, vorzugsweise, die Rollenhalter (16,17) des Wandelements (9) entweder als obere Rollenhalter (16) oder als mittlere Rollenhalter (17) ausgebildet sind.
